# EUROPEAN PATENT APPLICATION

(11) **EP 4 800 638 A1**
(43) Date of publication of application: **02.09.2026**
(21) Application number: 26160927.5
(22) Date of filing: 26.02.2026
(51) Int. Cl.: G06T 3/4046, G06T 3/4053

(54) **METHOD, SYSTEM AND APPARATUS FOR IMAGE RESOLUTION ENHANCEMENT**

(30) Priority: 27.02.2025 CN 202510225494
(71) Applicant: GeneMind Biosciences Company Limited, Shenzhen City, Guangdong Province 518023 (CN); Nanjing GeneMind Biosciences Company Limited, Nanjing City, Jiangsu 210000 (CN)
(72) Inventor: ZHANG, Yanhua, Shenzhen City, 518023 (CN); CHEN, Weiyue, Shenzhen City, 518023 (CN); HUANG, Yongping, Shenzhen City, 518023 (CN)
(74) Representative: Schiweck Weinzierl Koch Patentanwälte Partnerschaft mbB

(57) **Abstract**

The present application provides a method, a system, and an apparatus for image resolution enhancement. The method comprises: acquiring an original image obtained based on biomolecular microscopic detection; and inputting the original image into an image resolution enhancement model to obtain a target image; wherein, the image resolution enhancement model is obtained by means of the following method: acquiring a plurality of image pairs, the plurality of image pairs being image pairs obtained from images of at least one field of view captured by a microscopic imaging system at at least two time points, the field of view including a plurality of optically detectable biomolecules, one image pair including a first image and a second image of the same field of view captured at the same time point, and a peak signal-to-noise ratio of the first image being greater than a peak signal-to-noise ratio of the second image; and inputting the plurality of image pairs into a machine learning model, extracting features of each of the second images, and training the machine learning model using the first images as labels to obtain the image resolution enhancement model. The foregoing method can effectively enhance image resolution and improve image quality.

## Description

### TECHNICAL FIELD

The present application relates to the technical field of image processing, specifically to a method, system, and apparatus for image resolution enhancement, and more specifically to a method and system for image resolution enhancement, a computer device, a computer-readable storage medium, and a computer program product.

### BACKGROUND ART

With the rapid development of high-throughput sequencing technology, the accuracy and quality of sequencing data have become important factors affecting bioinformatics analysis results. In sequencing technology, the resolution of sequencing images directly impacts sequencing results.

Currently, the main methods for enhancing the resolution of sequencing fluorescence images include: improvement of optical systems, optimization of imaging algorithms, or employment of conventional image deblurring techniques. Improvement of optical systems requires higher-precision hardware, which is costly and constrained by physical limits; and conventional image deblurring methods (e.g., Wiener filtering and non-blind deconvolution, etc.) struggle to adaptively handle complex blurring situations arising from various factors (e.g., sample stage deformation, motion blur, and focusing errors, etc.) during sequencing.

### SUMMARY

The present application aims to address at least one of the technical issues in the related art to some extent. To this end, an objective of the present application is to provide a method capable of effectively enhancing the resolution of sequencing images.

In a first aspect of the present application, the present application provides a method for image resolution enhancement. According to an embodiment of the present application, the method comprises: acquiring an original image obtained based on biomolecular microscopic detection; and inputting the original image into an image resolution enhancement model to obtain a target image, wherein the image resolution enhancement model is obtained by means of the following method: acquiring a plurality of image pairs, the plurality of image pairs being image pairs obtained from images of at least one field of view captured by a microscopic imaging system at least two time points, the field of view comprising a plurality of optically detectable biomolecules, one image pair comprising a first image and a second image of the same field of view captured at the same time point, and a peak signal-to-noise ratio of the first image being greater than a peak signal-to-noise ratio of the second image; and inputting the plurality of image pairs into a machine learning model, extracting features of each of the second images, and training the machine learning model using the first images as labels, to obtain the image resolution enhancement model.

The foregoing method can effectively enhance image resolution and improve image quality by means of inputting the original image into the image resolution enhancement model trained based on machine learning. By training the model with a plurality of image pairs with high and low peak signal-to-noise ratios, the method adaptively handles diverse blurring issues caused by factors such as defocus blur, motion blur and deformation blur, thereby reducing reliance on hardware improvements and lowering costs and technical barriers. Meanwhile, in biomolecular microscopic detection scenarios, images with high peak signal-to-noise ratios help reduce crosstalk between fluorescent signal spots, and improve the accuracy of downstream algorithms in reading the intensity of bright spots such as fluorescent points, thereby enhancing the reliability of base calling and sequencing results.

In a second aspect of the present application, the present application provides a system for image resolution enhancement. According to an embodiment of the present application, the system comprises: an original image acquisition module, used to acquire an original image obtained based on biomolecular microscopic detection; and a target image acquisition module, used to input the original image into an image resolution enhancement model to obtain a target image; wherein the image resolution enhancement model is obtained by means of the following method: acquiring a plurality of image pairs, the plurality of image pairs being image pairs obtained from images of at least one field of view captured by a microscopic imaging system at at least two time points, the field of view comprising a plurality of optically detectable biomolecules, one image pair comprising a first image and a second image of the same field of view captured at the same time point, and an image resolution of the first image being higher than an image resolution of the second image; and inputting the plurality of image pairs into a machine learning model, extracting features of each of the second images, and training the machine learning model using the first images as labels, to obtain the image resolution enhancement model.

The system for image resolution enhancement can output a target image with higher resolution based on a low-resolution original image by means of a machine learning model, which effectively breaks through the limitations imposed by diffraction limit and other blurring factors, and enhances the definition and details of the image. By training with image pairs exhibiting various blur types, the system enables the model to adapt to different blurring conditions, thereby enhancing flexibility and accuracy of the model in actual use.

In a third aspect of the present application, the present application provides an electronic device. According to an embodiment of the present application, the device comprises: a processor and a memory, wherein the memory is used to store a computer program; and the processor is used to execute the computer program to implement the method according to the first aspect.

In a fourth aspect of the present application, the present application provides a computer-readable storage medium. According to an embodiment of the present application, the computer-readable storage medium comprises computer instructions that, when executed by a computer, cause the computer to implement the method according to the first aspect and the second aspect.

According to a fifth aspect of the present application, the present application provides a computer program product. According to an embodiment of the present application, the computer program product comprises computer instructions that, when partially or entirely run on a computer, cause the model training method according to the first aspect to be executed.

The electronic device, the computer-readable storage medium, and the computer program product automatically execute the method for image resolution enhancement by means of the computer instructions, thereby achieving efficient automation. Additionally, based on the characteristics of the instructions, they exhibit better stability in different environments.

Additional aspects and advantages of the present application will be provided in part in the following description, and will become apparent in part from the following description, or may be understood by means of putting the present application into practice.

### BRIEF DESCRIPTION OF THE DRAWINGS

To more clearly illustrate the technical solutions in embodiments of the present application, drawings to be used in the description of the embodiments will be briefly described below. Obviously, the drawings in the following description are merely some embodiments of the present application. For those of ordinary skill in the art, other drawings can further be obtained according to those drawings without the exercise of inventive effort.
FIG. 1 is a schematic flowchart of a method for image resolution enhancement according to an embodiment of the present application;
FIG. 2 is a schematic diagram of a system for sequencing image resolution enhancement according to an embodiment of the present application;
FIG. 3 is a schematic diagram of an electronic device according to an embodiment of the present application;
FIG. 4 is a schematic diagram of a comparison result (upper left corner) between an original image and a processed image according to an embodiment of the present application;
FIG. 5 is a schematic diagram of a comparison result (upper right corner) between an original image and a processed image according to an embodiment of the present application;
FIG. 6 is a schematic diagram of a comparison result (lower right corner) between an original image and a processed image according to an embodiment of the present application.

### DETAILED DESCRIPTION OF THE PREFERRED EMBODIMENTS

The technical solutions in the embodiments of the present invention will be clearly and completely described below with reference to the drawings in the embodiments of the present invention. Obviously, the described embodiments are only some, not all, of the embodiments of the present invention. Based on the embodiments of the present invention, all other embodiments obtained by those of ordinary skill in the art without the exercise of inventive effort shall fall within the scope of protection of the present invention.

It should be noted that the terms "first," "second," etc., in the description, claims, and drawings of the present invention are used to distinguish similar objects and are not necessarily used to describe a specific order or sequence. It should be understood that data used in this way can be interchanged where appropriate so that the embodiments of the present invention described herein can be implemented in a sequence other than those illustrated or described herein. Furthermore, the terms "comprise" and "have" and any variations thereof are intended to cover non-exclusive inclusion. For example, a process, method, system, product, or server that includes a series of steps or units is not necessarily limited to those steps or units that are explicitly listed, but may include other steps or units that are not explicitly listed or that are inherent to that process, method, product, or device.

In the embodiments of the present application, the term "module" or "unit" refers to a computer program or a part of a computer program having a predetermined function, which works together with other related parts to achieve a predetermined objective, and may be implemented in whole or in part using software, hardware (such as a processing circuit or a memory), or a combination thereof. Similarly, one processor (or a plurality of processors or memories) may be configured to implement one or more modules or units. Additionally, each module or unit may be part of an integrated module or unit encompassing the functionality of the module or unit.

Unless otherwise specified, the term "machine learning model" herein refers to a computing model or algorithm that can automatically perform tasks such as prediction, classification, identification, or decision making by learning from and analyzing input data. The learning process of the model is implemented by, based on statistical principles and data pattern recognition, performing model parameter adjustment and model optimization using a training dataset, to improve the prediction or inference capabilities of the model. Machine learning models may employ various algorithms and techniques, such as neural networks, support vector machines, decision trees, random forests, deep learning, and the like. These models may be trained and optimized by means of supervised learning, unsupervised learning or reinforcement learning. In practical applications, machine learning models are applicable across various domains, such as natural language processing, image recognition, pattern recognition, data mining, recommendation systems, and predictive analysis. They possess significant application potential in processing large-scale data, automating decision-making, and enabling intelligent systems. However, it is to be noted that in specific applications of machine learning models, in-depth research into the features and models used for prediction is required to achieve relatively satisfactory predictive results; otherwise, various issues may arise, such as overfitting, underfitting, and poor generalization capability. After extensive experimental verification, the inventors of the present application have found that utilizing a machine learning model to train on various types of second images (blurred sequencing images) and their corresponding first images (clear sequencing images) enables obtaining a machine learning model capable of adaptive processing of blurred sequencing images.

Unless otherwise specified herein, the term "sequencing image" refers to image data generated in a DNA/RNA sequencing process. This process aims to determine the precise order of bases (adenine, cytosine, guanine, and thymine) in a DNA molecule. The generation of sequencing images involves several critical steps: first, DNA molecules are typically fragmented into short segments, which are then introduced into a sequencing reaction. During the sequencing reaction, bases are labeled with special markers, each distinguished by a different fluorescent color for subsequent identification. Next, fluorescent signals generated by the sequencing reaction are captured and recorded in images, typically by means of a camera or laser scanner. The location and intensity of the signals reflect the sequence and quantity of the bases. To obtain accurate serial information of DNA, complex image processing and signal analysis are required to associate each signal with its corresponding base. The signals included in each sequencing image are processed using a computer program or algorithm. Finally, the exact sequence of the DNA molecule is obtained. During the sequencing process, the inventors have found that in the image processing and signal analysis processes, the sequencing images may suffer from defocus blur due to various reasons, leading to significant difficulty in analyzing the sequencing signals and resulting in low accuracy of sequencing results.

Unless otherwise specified herein, so-called sequencing images may be obtained from different sequencing platforms. The present application imposes no specific limitations thereon. In some examples of this application, optional sequencing platforms include, but are not limited to, HiSeq, MiSeq, NextSeq, and NovaSeq sequencing platforms from Illumina; Ion Torrent platforms from Thermo Fisher/Life Technologies; BGISEQ and MGISEQ/DNBSEQ platforms from BGI; and single-molecule sequencing platforms. A sequencing method may be selected from single-end sequencing, double-end sequencing, or a sequencing method supported by a selected automated sequencing platform, etc.

Unless otherwise specified herein, a so-called "bright spot" (spots or peaks), also referred to as a "bright point" or a "light point", refers to a location on an image that has a relatively strong signal. For example, the signal at the location is stronger than that of a surrounding area, and appears as a relatively bright spot or point on the image. One bright spot or one so-called location occupies one or more pixels.

Unless otherwise specified herein, the term "training set" refers to sequencing images used for training a machine learning model. It includes a series of input samples (blurred images) and corresponding known outputs (sharp images). In the training phase, the machine learning model utilizes the samples in the training set to learn and adjust the parameters of the model, so as to minimize errors between prediction results and true labels. By means of continuously trying different parameters and algorithms, the model gradually learns patterns and features across samples, thereby achieving more accurate predictive capabilities.

Unless otherwise specified herein, the term "test set" refers to a dataset used for evaluating the performance of a machine learning model. The test set also includes input samples (blurred images) and corresponding true outputs (sharp images), but the samples in the test set are not used in the training phase of the model, which can ensure that the data of the test set is unknown to the model. After the training is completed, the test set is used to evaluate the performance of the model, that is, the model makes predictions on the samples in the test set, and compares these predictions with the true labels. By means of comparing the prediction results with the true labels, the performance of the model on the unknown data is evaluated, thereby determining the generalization capability and prediction accuracy of the model.

In the field of gene sequencing, the resolution of sequencing images has a direct impact on the accuracy of sequencing results. In this context, there may be a plurality of factors that cause the resolution of sequencing images to decrease, such as motion blur that may occur in an image capture process, defocus blur caused by imprecise focusing, and defocus blur resulting from random deformation of a sample platform (biochip, also referred to as sequencing chip). Additionally, the factors causing defocus blur exhibit randomness and diversity features, such as being present across different sequencing runs, or within different base images of the same run and across different regions of the same base image. In view of the aforementioned issues, some existing techniques have been used to enhance sequencing image resolution. However, since the training data of machine learning models for resolution enhancement in prior art is homogeneous, only including image data captured at reduced and normal power (WO 2023158804 A1) or training datasets including images captured under different mobile stabilization times (unreduced and reduced scenarios) (WO 2023158809 A1), it is difficult to effectively cope with challenges of low-resolution sequencing images caused by various reasons.

In view of the aforementioned deficiencies, the inventors have conducted optimization in many aspects, e.g., increasing the diversity of training data of a machine learning model, introducing a spatial attention mechanism, and segmenting and reconstructing an original image.

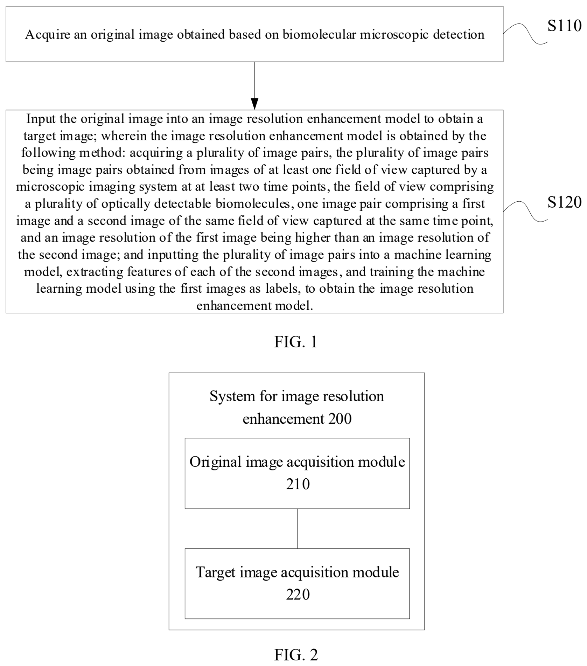

In one aspect of the present application, the present application provides a method for image resolution enhancement. Referring to FIG. 1, the method includes:
S110, An original image obtained based on biomolecular microscopic detection is acquired;
As used herein, "biomolecular microscopic detection" refers to a process of observing, analyzing and detecting biomolecules using microscopic imaging techniques. Specifically, it involves imaging biomolecules (e.g., nucleic acids, proteins, etc.) with optically detectable markers (e.g., fluorescent markers) by means of a microscopic imaging system (e.g., a fluorescence microscope) to obtain information about their type, spatial distribution, etc. In the embodiments of the present application, biomolecules refers to organic molecules with specific structures and functions within organisms, including but not limited to proteins, nucleic acids, polysaccharides, lipids, and the like. In some specific examples of the present application, the biomolecular microscopic detection includes using a microscopic imaging system to image nucleic acid molecules with fluorescent markers.

S120, The original image is input into an image resolution enhancement model to obtain a target image;
Wherein the image resolution enhancement model is obtained by means of the following method:
Acquiring a plurality of image pairs, the plurality of image pairs being image pairs obtained from images of at least one field of view captured by a microscopic imaging system at at least two time points, the field of view comprising a plurality of optically detectable biomolecules, one image pair comprising a first image and a second image of the same field of view captured at the same time point, and a peak signal-to-noise ratio of the first image being greater than a peak signal-to-noise ratio of the second image; and
Inputting the plurality of image pairs into a machine learning model, extracting features of each of the second images, and training the machine learning model using the first images as labels, to obtain the image resolution enhancement model.

In the embodiments of the present application, peak signal-to-noise ratio (PSNR) is a metric used to measure image quality, and represents the ratio of maximum possible power of an image signal to power of noise that affects observation. In the embodiments of the present application, the PSNR is employed to evaluate image quality.

The calculation formula for PSNR is: $PSNR = 20 {log}_{10} \left(\frac{{P}_{MAX}}{\sqrt{MSE}}\right)$ Where Pₘₐₓ represents the maximum possible power of the signal, and Pₘₐₓ=255 for an 8-bit image;
MSE refers to Mean Squared Error, representing the difference between an original image and a distorted image.

In some examples of the present application, the peak signal-to-noise ratio of the first image is greater than or equal to 30 dB, the peak signal-to-noise ratio of the second image is less than 30 dB, and the difference between the peak signal-to-noise ratios of the two is greater than or equal to 5 dB. By ensuring that there is a certain difference in peak signal-to-noise ratio between the first image and the second image, the adaptive capability of the model in processing images with different peak signal-to-noise ratios can be enhanced. This difference in peak signal-to-noise ratio provides sufficient training samples, so that the model can learn the restoration of image details more accurately, thereby improving the effectiveness of image resolution enhancement.

In some examples of the present application, the aforementioned first image is obtained by means of performing image capture on the field of view, and the aforementioned second image is obtained by performing blur processing on the aforementioned first image. That is, the first image is an image that is actually shot, and the second image is obtained by performing blur processing on the image that is actually shot. By artificially generating low-resolution images, the training data becomes richer and more diverse. Such a training approach enables the model to have a stronger capability of handling various types ofblur, so that the clarity and details of low-resolution images can be effectively enhanced, thereby improving the effectiveness of image resolution enhancement.

The blur processing includes various types, such as convolution kernels of different directions, lengths, and shapes, including Gaussian, mean, radial and rotational convolution kernels, and multiple degrees of blur and angles. Since the training data of the present application covers a variety of blur types, degrees and directions, the trained model possesses the capability to improve image resolution limited by the diffraction limit and to handle motion, defocus and deformation blur.

It may be appreciated that in the plurality of image pairs of the training data, the first images may be the same. For example, there are three image pairs, in which the first images are the same, and the second images are images obtained by applying different blur processing methods to the first images.

Since actual captured images may become blurred due to various reasons, such as diffraction limit, artificial chip deformation, motion blur and focus issues, the second images obtained through blur processing should also include the types of blurred images mentioned above. In some examples of the present application, the blur processing methods include: performing convolution on the aforementioned first image and a point spread function. By performing convolution on the first image and the point spread function, the blur phenomenon in the image can be effectively simulated and reproduced, thereby providing more realistic training data for the subsequent image resolution enhancement model. This makes the model more precise in processing blurred images, improves the effectiveness of image resolution enhancement, and strengthens the capability of the model to handle different blur scenarios in practical applications.

The convolution is performed by the following steps:
A: The point spread function is adapted to the first image;
   It is to be noted that the term "adapt" means that each pixel in the first image corresponds to a specific value in the point spread function.
B: Matrix transformation is performed on pixel values of points in each region of the first image and corresponding values of the point spread function, to obtain the second image.

In some examples of the present application, the point spread function is selected from at least one of a Gaussian elliptic function and a rectangular function.

In some specific examples of the present application, the formula of the Gaussian elliptic function applied is as follows: $psf = \frac{psf 1}{sum \left(psf1\right)} ;$ Where $psf 1 = {e}^{- \left(\frac{x _ {rot}^{2}}{2 ∗ {\left(sigma_x\right)}^{2}}+\frac{y _ {rot}^{2}}{2 ∗ {\left(sigma_y\right)}^{2}}\right)} ;$ $x _ rot = x ∗ cos \left(angle\right) - y ∗ sin \left(angle\right) ;$ $y _ rot = x ∗ sin \left(angle\right) + y ∗ cos \left(angle\right) ;$

In the formula, psf represents the spatial response characteristic of an optical system to a point light source. Ideally, a point light source, after passing through the optical system, would form a perfect point on an imaging plane. However, due to physical effects such as aberrations and diffraction of the optical system, during actual imaging, the point light source may form an extended bright spot on the imaging plane. psf1 represents the degree of blur; x and y represent pixel coordinates; x_rot and y_rot represent coordinates obtained by rotating original coordinates (x, y) counterclockwise around a center (center[0], center[1]) of the first image; sigma_x and sigma_y represent standard deviations of the Gaussian distribution of psf in x and y directions, respectively; and angle represents the rotation angle.

In some other specific examples of the present application, the formula of the rectangular function applied is as follows: $psf \left(x, y\right) = 1 / L , if \left(x*cos\left(θ\right)+y*sin\left(θ\right)\right) / L < = 1 , else 0$ where x and y represent pixel coordinates; θ represents the direction and angle of motion; and L represents the blur length. Here, 1/L represents a value, and θ may be a value within a range of [0, 360°]. The blur length is used to characterize the range of a blurred region, and may be represented by a lateral dimension, a longitudinal dimension, a radial dimension or the like of a blurred portion, for example, L may be a value in a range of [0,10]. A psf matrix is obtained based on the Gaussian elliptic function or the rectangular function, and then the psf matrix and the first image matrix are further subjected to multiplication and summation processing (matrix transformation) to obtain a second image pixel matrix, that is, a second image.

In some examples of the present application, the matrix transformation is implemented by the following formula: $lr = {\sum }_{m} {\sum }_{n} f \left(m, n\right) g \left(m, n\right)$ Where lr represents the pixel matrix of the second image; f(m, n) represents the pixel matrix of the first image; and g(m, n) represents the psf matrix.

In some other examples of the present application, the inventors also adjust photographing processing conditions to enhance the resolution of the second image, and the photographing processing conditions include, but are not limited to, scanning speed adjustment, exposure time adjustment, light source intensity adjustment, or the like.

In some examples of the present application, both the first image and the second image are obtained by means of performing image capture on the field of view. That is, both the first image and the second image are images that are actually shot. Use of two actually shot images may reflect various situations in practical applications, such as device performance fluctuations or changes in the shooting environment. This method can improve the adaptability and practicability of the image resolution enhancement model, thereby enabling the model to better cope with various image quality issues in the real world.

In some examples of the present application, the second image is obtained by performing image capture on the field of view through at least one of scanning angle adjustment, focus mode adjustment, scanning speed adjustment, exposure time adjustment, or light source intensity adjustment. Adjusting imaging parameters to acquire the second image directly yields images with different peak signal-to-noise ratios or degrees of blur, so that the training data is more in line with real imaging conditions, and the generalization capability of the model is enhanced. Meanwhile, this method may cover image quality degradation issues caused by different imaging conditions (e.g., insufficient light, focus shift, scanning speed change, etc.), so that the model can better handle various types of blurred and low-resolution images in practical applications, thereby improving the quality and detail retention of the finally restored image.

In some examples of the present application, inputting the plurality of image pairs into a machine learning model, extracting features of each of the second images, and training the machine learning model using the first images as labels, to obtain the image resolution enhancement model includes: performing image segmentation on the first image and the second image in the image pair according to a same image segmentation method, to form a plurality of first sub-regions and a plurality of second sub-regions, wherein image segmentation methods for different image pairs are the same or different; and for each image pair, inputting the plurality of first sub-regions and the plurality of second sub-regions into the machine learning model, extracting features of the second sub-regions, and training the machine learning model using the first sub-regions as labels, to obtain the image resolution enhancement model. By means of performing image segmentation on the first image and the second image, the adaptability of the model to the blur diversity in different regions of the same image can be enhanced, so that the model can effectively handle localized blur issues caused by factors such as defocus, motion blur, or optical distortion, thereby improving the overall image quality. Additionally, the image segmentation may also increase the effective utilization of training data, and avoid the issues of information redundancy or uneven weight distribution when the entire image is input, so that the model is more efficient in the training process, and has better generalization capability and robustness.

It may be appreciated that the aforementioned same image segmentation method refers to performing image segmentation on the first image and the second image in one image pair using the same image segmentation method (e.g., regular grid segmentation, segmentation based on edge detection, adaptive threshold segmentation, etc.).

In some examples of the present application, the inputting the original image into an image resolution enhancement model to obtain a target image includes: performing segmentation on the original image according to the image segmentation method to obtain a plurality of original sub-regions; inputting the plurality of original sub-regions into the image resolution enhancement model, and outputting a plurality of target sub-regions; and recombining the plurality of target sub-regions into the target image based on a mapping relationship before and after image cutting in the image segmentation method. By segmenting the original image and processing a plurality of small regions respectively, the resolutions of local details can be enhanced more effectively, and the adaptability of the model to the degrees of blur of different regions can be improved. Compared with a method in which an entire image is input into a model, the method can reduce computational burden, improve inference efficiency, and avoid performance degradation of the model due to excessively large image sizes. Additionally, based on the mapping relationship in the image segmentation method, recombining the target sub-regions into a complete target image ensures the structural integrity of the image, and avoids edge artifacts or information loss caused by the segmentation processing, thereby improving overall image quality and visual consistency.

In some examples of the present application, the optically detectable biomolecule includes an optically detectable marker. The optically detectable marker is at least one of a fluorescent marker, a chemiluminescent marker, and a light scattering marker.

In some examples of the present application, the features of the optically detectable marker include at least one of bright spot hue information, bright spot saturation information, bright spot pixel information, bright spot intensity information, and bright spot position information.

It may be appreciated that the aforementioned bright spot hue information includes color information of bright spots, e.g., the hue of bright spots of the first image in one image pair is green, and the hue of bright spots of the first image in another image pair is red; and the aforementioned bright spot saturation information indicates the relative proportion of the signal intensity of the detectable label to background noise, e.g., high saturation indicates a strong marker signal and low background noise, while low saturation may indicate photobleaching.

The bright spot pixel information may include one or more of a pixel value, a pixel size, a pixel spacing, a pixel resolution, a color mode and channel, a pixel grayscale or fluorescence intensity of the bright spot, and statistical information of pixels, such as a mean value and a standard deviation of pixel values.

In some examples of the present application, the machine learning model adopts a spatial attention mechanism architecture. Introduction of the spatial attention mechanism architecture helps preserve the relative luminance relationships between bright spots such as fluorescent spots, thereby avoiding the loss of relative luminance between bright spots such as fluorescent dots, which could lead to base identification errors. The spatial attention mechanism architecture includes a convolutional layer, an attention layer, and an upsampling layer.

In some examples of the present application, the convolutional layer includes a plurality of convolutional operations. The convolutional layer mentioned here includes one or more convolutional layers. The plurality of convolutional operations includes performing a plurality of convolutional operations within one convolutional layer, or performing a plurality of convolutional operations within a plurality of convolutional layers. While performing a plurality of convolutional operations within one or more convolutional layers, at least one of the convolutional operations uses at least one convolutional kernel to extract features of the training set image, and at least one of the convolutional operations uses at least one convolutional kernel to reduce the number of input channels.

By way of example, if there are two convolutional layers, and each convolutional layer performs one convolutional operation, in the first convolutional layer, the convolutional operation is used to acquire the features of the training set image using at least one convolutional kernel, and in the second convolutional layer, the convolutional operation is used to reduce the number of input channels using at least one convolution kernel.

In some examples of the present application, the attention layer is used to generate a spatial attention map, which maps the input feature map to the attention map through convolutional operations to dynamically adjust the importance of different regions in the input image. In the generated spatial attention map, weight information for each pixel location is included. The weight information is obtained through a softmax operation.

By way of example, the attention layer is used to generate the spatial attention map by the following steps:
First, a convolution operation is performed on an input feature map via a convolutional layer to generate an attention map having the same size as the input feature map.

Then, a "softmax" function is applied to the generated attention map for normalization to ensure that a sum of weights at all positions equals 1. In this step, an attention map having the same size as the input feature map is generated, and the value at each position (pixel point) represents the weight of the feature of that position in terms of importance.

Finally, the input feature map is multiplied by the generated attention map to focus attention on an important region in the input feature map, thereby enhancing image resolution and improving image quality.

In some examples of the present application, the upsampling layer is used for first image reconstruction.

In some examples of the present application, the training is conducted in the following manner: a. extracting a plurality of features of the second image using the convolutional layer; b. performing convolution processing on the plurality of features of the second image using the attention layer, to determine respective weights of the plurality of features of the second image; c. reconstructing the second image using the upsampling layer based on the respective weights of the plurality of features; and d. training the machine learning model based on a similarity between the reconstructed image and the first image to obtain the image resolution enhancement model.

By way of example, the steps of segmenting, mapping and reconstructing an image using the spatial attention mechanism architecture in the machine learning model of the present application are described in detail below.

First convolutional layer: Number of input channels: 1 (representing grayscale image input); Number of output channels: 64; Convolution kernel size: 9x9; Padding: 4; Purpose: This convolutional layer is intended for feature extraction by applying a 9x9 convolution kernel to capture local features of the input image.

Second convolutional layer: Number of input channels: 64; Number of output channels: 32; Convolution kernel size: 1x1; Purpose: This convolutional layer is used to reduce the number of channels of the feature map, from 64 channels to 32 channels, to reduce the computational complexity of the model.

Attention layer: Number of input channels: 1; Number of output channels: 1; Convolution kernel size: 1x1; Purpose: This layer is used to generate a spatial attention map, which maps the input feature map to the attention map through convolutional operations to dynamically adjust the importance of different regions in the input image.

Upsampling layer: Number of input channels: 32; Number of output channels: 1; Convolution kernel size: 5x5; Padding: 2; Purpose: This layer is used to perform final image reconstruction to convert the 32-channel feature map into a 1-channel high-resolution image.

The spatial attention mechanism architecture first extracts features through the first and second convolutional layers, and applies the ReLu activation function to each. Then, the importance of different regions in the feature map is dynamically adjusted through the attention layer, and finally, the final image reconstruction is performed through the upsampling layer to convert the feature map into a 1-channel high-resolution image.

In some examples of the present application, the machine learning model is selected from at least one of SRCNN, SRGAN, and EDSR.

In some examples of the present application, training the machine learning model includes: determining training termination timing using at least one of a mean square error loss, an L1 loss, and a structural similarity loss.

By way of example, taking the SRCNN model as an example, the loss functions used include: mean squared error loss, L1 loss, and structural similarity loss.

The so-called mean square error (MSE) is used to measure the difference between the prediction output of the model and the true high-resolution image. The calculation formula is as follows: MSE = (1 / N) * Σ (I_true - I_pred)^2;
Where, MSE: mean squared error loss; N: number of samples; Σ: summation symbol; I_true: pixel value of the true first image; I_pred: pixel value of the first image generated by the model.

The so-called L1 loss (MAE) is used to measure the absolute difference between the predicted value and the true value. The calculation formula is as follows: L1 loss = (1 / N) * Σ |I_true - I_pred|;
Where L1 loss: mean absolute error loss; N: number of samples; Σ: summation symbol; I_true: pixel value of the true high-resolution image; I_pred: pixel value of the high-resolution image generated by the model.

The so-called structural similarity loss (SSIM) is used to measure the structural similarity between two images, and it takes into account the information of three aspects: luminance, contrast and structure. The calculation formula for SSIM is as follows: 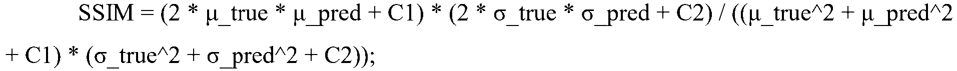 SSIM = (2 * µ_true * µ_pred + C1) * (2 * σ_true * σ_pred + C2) / ((µ_true^2 + µ_pred^2 + C1) * (σ_true^2 + σ_pred^2 + C2)); Where, SSIM: structural similarity index; µ_true, µ_pred: mean luminance of the true image and the predicted image; σ_true, σ_pred: luminance standard deviation of the true image and the predicted image; C1, C2: stability constants, typically used to avoid division by zero.

Those skilled in the art are aware that a high SSIM value indicates greater structural similarity between two images. Therefore, the objective of the SSIM loss is to maximize the SSIM value and minimize 1-SSIM.

In addition to using the above loss functions, the inventors also incorporated perceptual loss to address the issue of brightness difference loss between points. The primary purpose of introducing the perceptual loss in image generation tasks is to measure the feature similarity between a generated image and a true image by using a pre-trained deep learning model (typically a convolutional neural network, such as VGG16) to guide the generated image to be closer to the true image.

By way of example, the specific steps for introducing the perceptual loss into the loss function include:
Creation of a pre-trained VGG model: first, a suitable deep learning model is selected, which is typically a model pre-trained on a large-scale image dataset, such as VGG16. These models possess strong feature extraction capabilities for tasks like image classification. The pre-trained model includes a plurality of convolutional layers and pooling layers for hierarchically extracting features of the input image.

Feature extraction: During the forward propagation of a loss function, both a generated image (typically referred to as x) and a true image (typically referred to as y) are passed through the pre-trained VGG model to extract their feature representations. Typically, one or more layers (usually the first 16 layers, which may also be adjusted according to the task) of the pre-trained model are selected as a feature extractor. These layers are typically located at the top of the model, and may capture higher-level feature information.

Calculation of an MSE loss (mean square error loss): A mean square error (MSE) between feature representations of the generated image and the true image is calculated as a perceptual loss. The MSE loss measures the difference between the two in a feature space. The feature representation is typically a high-dimensional tensor, and the MSE loss is calculated by squaring the difference across each feature channel and summing over all channels. The objective is to encourage the generated image to be more similar to the true image in the feature space by minimizing the MSE loss.

Addition of the perceptual loss: the perceptual loss is added to an overall loss function. The overall loss function typically includes other loss terms, such as pixel-level mean square error loss or adversarial loss. In some examples of the present application, the introduction of perceptual loss helps generate images with higher visual quality and perceptual consistency.

In some examples of the present application, the determining termination timing includes: acquiring loss functions from a number N of consecutive model training sessions, and comparing the acquired loss functions; if, over the N model training sessions, the loss function obtained in each subsequent session does not decrease, or even increases, compared to the previous one, ending the training of the machine learning model, wherein N is a natural number greater than or equal to 5. By monitoring changes in the loss function, overtraining can be effectively avoided, computing resources can be saved, and training efficiency can be improved. Meanwhile, this judgment method based on the trend of the loss function helps the model avoid falling into local minima, thereby ensuring a more robust training process and resulting in a model with relatively optimized performance.

In some examples of the present application, the optically detectable biomolecule is a nucleic acid molecule with an optically detectable marker. That is, the method for image resolution enhancement according to the present application is selected from image processing in the field of gene sequencing. It may be appreciated that the method of the present application can also be applied to medical image processing and the like.

In some examples of the present application, a dataset used for model training in the present application includes test set images, the test set images also include first images and second images, and the second images are obtained by performing blur processing on the first images and/or are obtained by performing image capture on a field of view. The test set images are used to verify the performance of the trained machine learning model. It should be noted that the test set images are independent of the training set images.

In some examples of the present application, the method further includes performing performance verification on the trained machine learning model.

By way of example, at least one of the methods (1) and (2) is used to evaluate the performance of the model:
(1) Visual comparison is conducted to compare the difference between an image processed by the model and an original image to evaluate the image restoration quality.
(2) Evaluation based on image processing, such as base calling and sequence alignment is performed, and quantitative metrics such as an alignment rate and an error rate are calculated, to evaluate the performance of the model on specific tasks.

In another aspect of the present application, the present application provides a system for image resolution enhancement. Referring to FIG. 2, the system 200 includes: an original image acquisition module 210 and a target image acquisition module 220, where
The original image acquisition module 210 is used to acquire an original image obtained based on biomolecular microscopic detection;
The target image acquisition module 220 is used to input the original image into an image resolution enhancement model to obtain a target image; wherein the image resolution enhancement model is obtained by means of the following method: acquiring a plurality of image pairs, wherein the plurality of image pairs are image pairs obtained from images of at least one field of view captured by a microscopic imaging system at at least two time points, the field of view comprises a plurality of optically detectable biomolecules, one image pair includes a first image and a second image of the same field of view captured at the same time point, and a peak signal-to-noise ratio of the first image is greater than a peak signal-to-noise ratio of the second image; and inputting the plurality of image pairs into a machine learning model, extracting features of each of the second images, and training the machine learning model using the first images as labels to obtain the image resolution enhancement model.

In some examples of the present application, the peak signal-to-noise ratio of the first image is greater than or equal to 30 dB, the peak signal-to-noise ratio of the second image is less than 30 dB, and the difference between the peak signal-to-noise ratios of the two is greater than or equal to 5 dB.

In some examples of the present application, the first image is obtained by performing image capture on the field of view, and the second image is obtained by performing blur processing on the aforementioned first image.

In some examples of the present application, the blur processing includes: performing convolution on the first image and a point spread function.

In some examples of the present application, the convolution is performed by the following steps: A. adapting the point spread function to the first image; and B. performing matrix transformation on pixel values of points in target regions of the first image and corresponding values of the point spread function, to obtain the second image.

In some examples of the present application, the point spread function is selected from at least one of a Gaussian elliptic function and a rectangular function.

In some examples of the present application, the formula of the Gaussian elliptic function is as follows: $psf = \frac{psf 1}{sum \left(psf1\right)} ;$ Where $psf 1 = {e}^{- \left(\frac{x _ {rot}^{2}}{2 ∗ \left(sigma_x\right)}+\frac{y _ {rot}^{2}}{2 ∗ {\left(sigma_y\right)}^{2}}\right)} ;$ $x _ rot = x ∗ cos \left(angle\right) - y ∗ sin \left(angle\right) ;$ $y _ rot = x ∗ sin \left(angle\right) + y ∗ cos \left(angle\right) ;$ Wherein
psf represents the spatial response characteristics of an optical system to a point light source; psf1 represents the degree of blur; x and y represent pixel coordinates; x_rot and y_rot represent coordinates obtained by rotating original coordinates (x, y) counterclockwise around a center (center[0], center[1]) of the first image; sigma_x and sigma_y represent standard deviations of the Gaussian distribution of psf in x and y directions, respectively; and angle represents the rotation angle.

In some examples of the present application, the formula of the rectangular function is as follows: $psf \left(x, y\right) = 1 / L , if \left(x*cos\left(θ\right)+y*sin\left(θ\right)\right) / L < = 1 ;$ $psf \left(x, y\right) = 0 , if else ;$ Where x and y represent pixel coordinates; θ represents the direction and angle of motion; and L represents the blur length. Here, 1/L represents a value, and θ may be a value within a range of [0, 360°]. The blur length is used to characterize the range of a blurred region, and may be represented by a lateral dimension, a longitudinal dimension, a radial dimension, or the like of a blurred portion, for example, L may be a value in a range of [0,10].

In some examples of the present application, the matrix transformation is implemented by the following formula: $lr = {\sum }_{m} {\sum }_{n} f \left(m, n\right) g \left(m, n\right)$ Where lr represents the pixel matrix of the second image; f(m, n) represents the pixel matrix of the first image; and g(m, n) represents the psf matrix.

In some examples of the present application, both the first image and the second image are obtained by performing image capture on the field of view.

In some examples of the present application, the second image is obtained by performing image capture on the field of view through at least one of scanning angle adjustment, focus mode adjustment, scanning speed adjustment, exposure time adjustment, or light source intensity adjustment.

In some examples of the present application, the inputting the plurality of image pairs into a machine learning model, extracting features of each of the second images, and training the machine learning model using the first images as labels to obtain the image resolution enhancement model includes: performing image segmentation on the first image and the second image in the image pair according to a same image segmentation method, to form a plurality of first sub-regions and a plurality of second sub-regions, wherein image segmentation methods for different image pairs are the same or different; and for each image pair, inputting the plurality of first sub-regions and the plurality of second sub-regions into the machine learning model, extracting features of the second sub-regions, and training the machine learning model using the first sub-regions as labels, to obtain the image resolution enhancement model.

In some examples of the present application, the inputting the original image into an image resolution enhancement model to obtain a target image includes: performing segmentation on the original image according to the image segmentation method to obtain a plurality of original sub-regions; inputting the plurality of original sub-regions into the image resolution enhancement model, and outputting a plurality of target sub-regions; and recombining the plurality of target sub-regions into the target image based on a mapping relationship before and after image cutting in the image segmentation method.

In some examples of the present application, the optically detectable biomolecule includes an optically detectable marker. The optically detectable marker is at least one of a fluorescent marker, a chemiluminescent marker, and a light scattering marker.

In some examples of the present application, the features of the optically detectable marker include at least one of bright spot hue information, bright spot saturation information, bright spot pixel information, bright spot intensity information, and bright spot position information.

In some examples of the present application, the machine learning model adopts a spatial attention mechanism architecture.

In some examples of the present application, the spatial attention mechanism architecture includes a convolutional layer, an attention layer, and an upsampling layer, and the training is conducted in the following manner: a. extracting a plurality of features of the second image using the convolutional layer; b. performing convolution processing on the plurality of features of the second image using the attention layer to determine respective weights of the plurality of features of the second image; c. reconstructing the second image using the upsampling layer based on the respective weights of the plurality of features; and d. training the machine learning model based on a similarity between the reconstructed image and the first image to obtain the image resolution enhancement model.

In some examples of the present application, the machine learning model is selected from at least one of SRCNN, SRGAN, and EDSR.

In some examples of the present application, training the machine learning model includes: determining training termination timing using at least one of a mean square error loss, an L1 loss, and a structural similarity loss.

In some examples of the present application, the determining termination timing includes: acquiring loss functions from a number N of consecutive model training sessions, and comparing the acquired loss functions; if, over the N model training sessions, the loss function obtained in each subsequent session does not decrease, or even increases, compared to the previous one, ending the training of the machine learning model, wherein N is a natural number greater than or equal to 5.

In some examples of the present application, the optically detectable biomolecule is a nucleic acid molecule with an optically detectable marker.

It should be understood that the apparatus embodiments and the method embodiments may correspond to each other, and similar descriptions may be referred to in the method embodiments. To avoid repetition, details are not described again here. Specifically, the apparatus 200 shown in FIG. 2 may execute the method embodiments corresponding to FIG. 1, and the foregoing and other operations and/or functions of the various modules in the apparatus 200 are respectively intended to implement corresponding processes in the methods in FIG. 1. For brevity, details are not described again here.

The apparatus 200 in the embodiments of the present application is described above from a perspective of a functional module with reference to the accompanying drawings. It should be understood that the functional module may be implemented in the form of hardware, may also be implemented in the form of software instructions, and may also be implemented by a combination of hardware and software modules. Specifically, the steps of the method embodiments in the embodiments of the present application may be completed by an integrated logic circuit of hardware in a processor and/or instructions in the form of software, and the steps of the method disclosed in combination with the embodiments of the present application may be directly executed and completed by a hardware decoding processor, or may be executed and completed by a combination of hardware and software modules in the decoding processor. Optionally, the software modules may be located in a mature storage medium in the present field such as a random access memory, a flash memory, a read-only memory, a programmable read-only memory, an electrically erasable programmable memory or a register. The storage medium is located in the memory, and the processor reads information in the memory and completes the steps in the foregoing method embodiments in combination with its hardware.

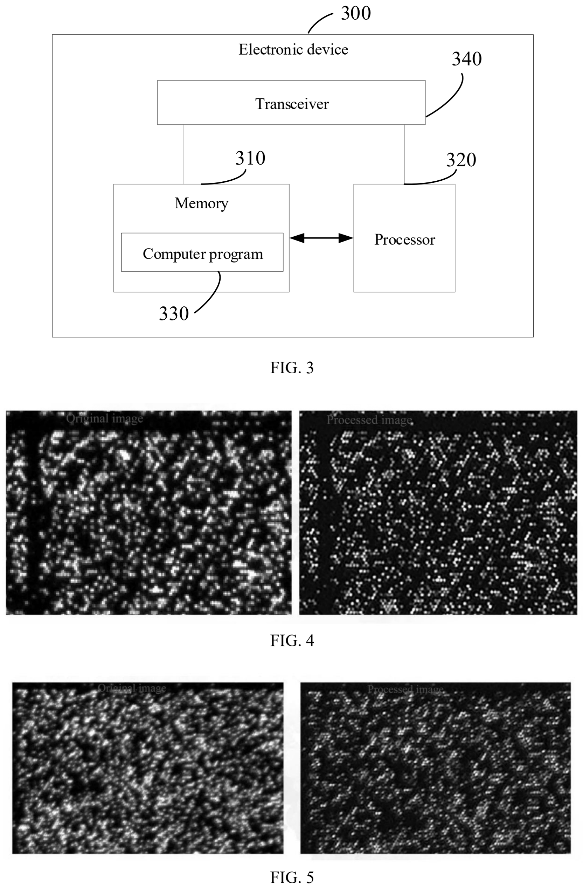

In yet another aspect of the present application, the present application provides an electronic device. Referring to FIG. 3, the electronic device 300 may be an execution device of the foregoing method, but is not limited thereto. As shown in FIG. 3, the electronic device 300 may include:
A memory 310 and a processor 320, where the memory 310 is used to store a computer program 330 and transmit the computer program 330 to the processor 320. In other words, the processor 320 may invoke and run the computer program 330 from the memory 310 to implement the method in the embodiments of the present application.

For example, the processor 320 may be used to execute the steps in the foregoing method according to instructions in the computer program 330.

In some embodiments of the present application, the processor 320 may include, but is not limited to:
a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware, or the like.

In some embodiments of the present application, the memory 310 includes, but is not limited to:
a volatile memory and/or a non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM), which acts as an external cache. By way of example, but not by way of limitation, many forms of RAMs are available, such as static random access memories (Static RAM, SRAM), dynamic random access memories (Dynamic RAM, DRAM), synchronous dynamic random access memories (Synchronous DRAM, SDRAM), double data rate synchronous dynamic random access memories (Double Data Rate SDRAM, DDR SDRAM), enhanced synchronous dynamic random access memories (Enhanced SDRAM, ESDRAM), synchronous link dynamic random access memories (Synchlink DRAM, SLDRAM) and direct memory bus random access memories (Direct Rambus RAM, DR RAM).

In some embodiments of the present application, the computer program 330 may be divided into one or more modules. The one or more modules are stored in the memory 310 and executed by the processor 320 to complete the method provided in the present application. The one or more modules may be a series of computer program instruction segments capable of performing specific functions, and the instruction segments are used to describe the execution process of the computer program 330 in the electronic device.

As shown in FIG. 3, the electronic device 300 may further include:
a transceiver 340, where the transceiver 340 may be connected to the processor 320 or the memory 310.

The processor 320 may control the transceiver 340 to communicate with other devices, and specifically, may send information or data to other devices, or receive information or data sent by other devices. The transceiver 340 may include a transmitter and a receiver. The transceiver 340 may further include an antenna, and there may be one or more antennas.

It should be understood that the various components in the electronic device 300 are connected by a bus system, where the bus system includes, in addition to a data bus, a power bus, a control bus, and a status signal bus.

According to an aspect of the present application, a computer-readable storage medium is provided, having computer instructions or programs stored thereon. The computer instructions or programs, when executed by a computer, cause the computer to execute the methods in the above method embodiments. In other words, an embodiment of the present application further provides a computer program product including instructions that, when executed by a computer, cause the computer to execute the methods in the foregoing method embodiments.

According to another aspect of the present application, a computer program product or a computer program is provided, the computer program product or the computer program including computer instructions, the computer instructions being stored in a computer-readable storage medium. A processor of a computer device reads the computer instructions from the computer-readable storage medium, executes the computer instructions, and causes the computer device to execute the methods in the foregoing method embodiments.

In other words, when implemented using software, it may be implemented entirely or partially in the form of a computer program product. The computer program product includes one or more computer instructions. When the computer program instructions are loaded and executed on a computer, the processes or functions according to the embodiments of the present application are generated entirely or partially. The computer may be a general-purpose computer, a special-purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, a computer, a server, or a data center to another website, computer, server, or data center in a wired (e.g., a coaxial cable, an optical fiber, or a digital subscriber line (DSL)) or wireless (e.g., infrared, radio, or microwave) manner. The computer-readable storage medium may be any available medium accessible by a computer, or a data storage device, such as a server or a data center, integrating one or more available media. The available medium may be a magnetic medium (e.g., a floppy disk, a hard disk, or a magnetic tape), an optical medium (e.g., a digital video disc (digital video disc, DVD)), a semiconductor medium (e.g., a solid-state drive (SSD)), or the like.

Those of ordinary skill in the art may appreciate that, the modules and algorithm steps of the examples described in combination with the embodiments disclosed herein can be implemented by electronic hardware, or a combination of computer software and electronic hardware. Whether those functions are performed in hardware or software depends on specific application and design constraints of the technical solution. Those skilled in the art may use different methods to implement the described functions for each specific application, but such implementation should not be considered to be beyond the scope of the present application.

In several embodiments provided by the present application, it should be understood that the disclosed systems, apparatuses and methods may be implemented in other manners. For example, the apparatus embodiments described above are merely illustrative. For example, the division of the modules is only a logical function division. During actual implementation, there may be other division methods. For example, a plurality of modules or components may be combined or integrated into another system, or some features may be ignored or not implemented. Furthermore, the displayed or discussed coupling or direct coupling or communication connections may be by means of some interfaces, and the indirect coupling or communication connections of apparatuses or modules may be in electrical, mechanical or other forms.

The modules described as separate components may or may not be physically separated, and the components displayed as modules may or may not be physical modules, that is, they may be located in one place, or may be distributed to a plurality of network units. Some or all of the modules may be selected according to actual needs to implement the solution of the present embodiment. For example, the functional modules in various embodiments of the present application may be integrated in one processing module, or each module may be individually physically present, or two or more modules may be integrated into one module.

The Detailed Description of the Preferred Embodiments of the present application is merely described above, but the scope of protection of the present application is not limited thereto. Any person skilled in the art can easily conceive of changes or substitutions within the technical scope disclosed in the present application, and all of the changes or substitutions should be covered by the scope of protection of the present application. Therefore, the scope of protection of the present application should be defined by the scope of protection of the claims.

The solutions of the present application will be explained below in conjunction with examples. Those skilled in the art will understand that the following examples are only used to illustrate the present application, and should not be construed as limiting the scope of the present application.

### Embodiment 1: Model Performance Evaluation

Data source: The image size of training data is 580*650 pixels. A total of 5000 first-second image pairs obtained from sequencing are used as training data. and the images in the image pairs are all images including fluorescent points, where 3000 image pairs are from actual photographing, and 2000 image pairs are obtained by constructing different psf blurring functions to perform blur processing on first images.

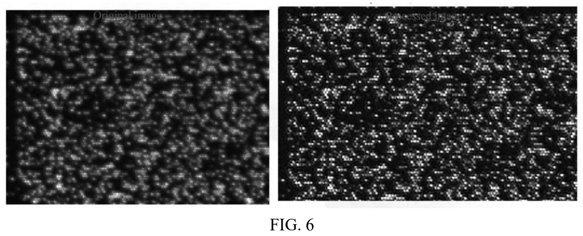

The model is trained using the method described in the Detailed Description of the Preferred Embodiments of the present application, and the obtained model evaluation results are as follows:
1. Visual comparison of original images with different degrees of blur and processed images
   As can be seen from FIG. 4 to FIG. 6, compared with the original images (left images in FIGS.4-6), the resolution of the processed images (right images in FIGS.4-6) is significantly improved, the spots become significantly smaller, and the separation effect between bright spots is significantly enhanced.
2. Base calling performance is shown in Table 1. It can be seen that for images with different degrees and directions of blur, the processed images show increased alignment rates and significantly decreased error rates compared to the original images, especially in the upper right and lower right regions where deformation is more pronounced. Even with a significant increase in alignment rate, the error rate is still greatly decreased. The error rate is a quality value used to evaluate the accuracy of base calling results, reflecting the credibility of base calling during the sequencing process. The smaller the error rate, the higher the credibility of the base calling result; and the larger the error rate, the lower the credibility of the base calling result. The alignment rate refers to the percentage of sequences for sequencing aligned with the sample reference sequence.

**Table 1 Comparison Results of Base Calling Performance**

| **Region** | **Original Image Error Rate %** | **Original Image Alignment Rate %** | **Processed Image Error Rate %** | **Processed Image Alignment Rate %** | **Error Rate Decrease %** | **Alignment Rate Increase %** |
|---|---|---|---|---|---|---|
| Upper left corner | 0.37 | 80.1 | 0.18 | 82.2 | 51.3 | 2.6 |
| Upper right corner | 2.34 | 15.4 | 1.48 | 48.3 | 36.7 | 213 |
| Lower right corner | 1.67 | 30.17 | 0.85 | 65.45 | 49.1 | 117 |

In the description of the present specification, description with reference to terms such as "one example", "some example", "exemplification", "specific exemplification", or "some exemplifications", etc. denotes that a specific feature, structure, material or characteristic described in conjunction with the example or exemplification is included in at least one example or exemplification of the present application. In the present specification, the schematic expressions of the described terms do not necessarily refer to the same example or exemplification. Moreover, the specific feature, structure, material or characteristic described may be combined in any one or more examples or exemplifications in a suitable manner.

Although the examples of the present application have been illustrated and described, it may be appreciated that the described examples are illustrative, and should not be construed as a limitation to the present application. A person of ordinary skilled in the art can make changes, modifications, substitutions and variations to the foregoing examples within the scope of the present application without departing from the principle and spirit of the present application.

## Claims

1. A method for image resolution enhancement, wherein the method comprises the following steps:
acquiring an original image obtained based on biomolecular microscopic detection; and
inputting the original image into an image resolution enhancement model to obtain a target image;
wherein, the image resolution enhancement model is obtained by means of the following method:
acquiring a plurality of image pairs, the plurality of image pairs being image pairs obtained from images of at least one field of view captured by a microscopic imaging system at at least two time points, the field of view comprising a plurality of optically detectable biomolecules, one image pair comprising a first image and a second image of the same field of view captured at the same time point, and a peak signal-to-noise ratio of the first image being greater than a peak signal-to-noise ratio of the second image; and
inputting the plurality of image pairs into a machine learning model, extracting features of each of the second images, and training the machine learning model using the first images as labels to obtain the image resolution enhancement model.

2. The method according to claim 1, wherein the peak signal-to-noise ratio of the first image is greater than or equal to 30 dB, the peak signal-to-noise ratio of the second image is less than 30 dB, and the difference between the peak signal-to-noise ratios of the first image and the second image is greater than or equal to 5 dB; and/or
wherein the first image is obtained by means of performing image capture on the field of view, and the second image is obtained by performing blur processing on the first image.

3. The method according to claim 2, wherein the blur processing comprises: performing convolution on the first image and a point spread function, and the convolution is performed by means of the following steps:
A: adapting the point spread function to the first image; and
B: performing matrix transformation on pixel values of points in target regions of the first image and corresponding values of the point spread function, to obtain the second image.

4. The method according to claim 3, wherein the point spread function is selected from at least one of a Gaussian elliptic function and a rectangular function.

5. The method according to claim 4, wherein the formula of the Gaussian elliptic function is as follows: $psf = \frac{psf 1}{sum \left(psf1\right)} ;$ where $psf 1 = {e}^{- \left(\frac{{x_rot}^{2}}{2 ∗ {\left(sigma_x\right)}^{2}}+\frac{{y_rot}^{2}}{2 ∗ {\left(sigma_y\right)}^{2}}\right)} ;$ $x _ rot = x ∗ cos \left(angle\right) - y ∗ sin \left(angle\right) ;$ $y _ rot = x ∗ sin \left(angle\right) + y ∗ cos \left(angle\right) ;$ wherein
psf represents the spatial response characteristics of an optical system to a point light source;
psf1 represents the degree of blur;
x and y represent pixel coordinates;
x_rot and y_rot represent coordinates obtained by rotating original coordinates (x, y) counterclockwise around a center (center[0], center[1]) of the first image;
sigma_x and sigma_y represent standard deviations of the Gaussian distribution of psf in x and y directions, respectively; and
angle represents the rotation angle; or
wherein the formula of the rectangular function is as follows: $psf \left(x, y\right) = 1 / L , if \left(x*cos\left(θ\right)+y*sin\left(θ\right)\right) / L < = 1 ;$ $psf \left(x, y\right) = 0 , if else 0 ;$ where
x and y represent pixel coordinates;
θ represents the direction and angle of motion; and
L represents the blur length.

6. The method according to claim 3, wherein the matrix transformation is implemented by the means of following formula: $lr = {\sum }_{m} {\sum }_{n} f \left(m, n\right) g \left(m, n\right)$ where
lr represents the pixel matrix of the second image;
f(m, n) represents the pixel matrix of the first image; and
g(m, n) represents the psf matrix.

7. The method according to claim 2, wherein both the first image and the second image are obtained by means of performing image capture on the field of view; and the second image is obtained by performing image capture on the field of view by means of at least one of scanning angle adjustment, focus mode adjustment, scanning speed adjustment, exposure time adjustment, or light source intensity adjustment.

8. The method according to any one of claims 1 to 7, wherein the inputting the plurality of image pairs into a machine learning model, extracting features of each of the second images, and training the machine learning model using the first images as labels to obtain the image resolution enhancement model comprises:
performing image segmentation on the first image and the second image in the image pair according to a same image segmentation method, to form a plurality of first sub-regions and a plurality of second sub-regions, wherein image segmentation methods for different image pairs are the same or different; and
for each image pair, inputting the plurality of first sub-regions and the plurality of second sub-regions into the machine learning model, extracting features of the second sub-regions, and training the machine learning model using the first sub-regions as labels, to obtain the image resolution enhancement model.

9. The method according to claim 8, wherein the inputting the original image into the image resolution enhancement model to obtain a target image comprises:
performing segmentation on the original image according to the image segmentation method to obtain a plurality of original sub-regions;
inputting the plurality of original sub-regions into the image resolution enhancement model, and outputting a plurality of target sub-regions; and
recombining the plurality of target sub-regions into the target image based on a mapping relationship before and after image cutting in the image segmentation method.

10. The method according to any one of claims 1 to 9, wherein the optically detectable biomolecule comprises an optically detectable marker;
optionally, the optically detectable marker is at least one of a fluorescent marker, a chemiluminescent marker, and a light scattering marker; and
optionally, the features of the optically detectable marker comprise at least one of bright spot hue information, bright spot saturation information, bright spot pixel information, bright spot intensity information, and bright spot position information.

11. The method according to claim 10, wherein the machine learning model adopts a spatial attention mechanism architecture; and
the spatial attention mechanism architecture comprises a convolutional layer, an attention layer, and an upsampling layer;
the training is conducted in the following manner:
a: extracting a plurality of features of the second image using the convolutional layer;
b: performing convolution processing on the plurality of features of the second image using the attention layer, to determine respective weights of the plurality of features of the second image;
c: reconstructing the second image using the upsampling layer based on the respective weights of the plurality of features; and
d: training the machine learning model based on a similarity between the reconstructed image and the first image to obtain the image resolution enhancement model.

12. The method according to any one of claims 1 to 11, wherein the machine learning model is selected from at least one of SRCNN, SRGAN, and EDSR; or
wherein the machine learning model is selected from at least one of SRCNN, SRGAN, and EDSR, and the training the machine learning model comprises: determining training termination timing using at least one of a mean square error loss, an L1 loss, and a structural similarity loss.

13. The method according to claim 12, wherein the determining termination timing comprises: acquiring loss functions from a number N of consecutive model training sessions, and comparing the acquired loss functions; if, over the N model training sessions, the loss function obtained in each subsequent session does not decrease, or even increases, compared to the previous one, ending the training of the machine learning model, wherein N is a natural number greater than or equal to 5.

14. A system for image resolution enhancement, wherein the system comprises:
an original image acquisition module, used to acquire an original image obtained based on biomolecular microscopic detection; and
a target image acquisition module, used to input the original image into an image resolution enhancement model to obtain a target image;
wherein, the image resolution enhancement model is obtained by means of the following method:
acquiring a plurality of image pairs, the plurality of image pairs being image pairs obtained from images of at least one field of view captured by a microscopic imaging system at least two time points, the field of view comprising a plurality of optically detectable biomolecules, one image pair comprising a first image and a second image of the same field of view captured at the same time point, and a peak signal-to-noise ratio of the first image being greater than a peak signal-to-noise ratio of the second image; and
inputting the plurality of image pairs into a machine learning model, extracting features of each of the second images, and training the machine leaming model using the first images as labels to obtain the image resolution enhancement model.

15. An electronic device, wherein the device comprises: a processor and a memory;
the memory is used to store a computer program; and
the processor is used to execute the computer program to implement the method according to any one of claims 1 to 13.
